# FASCICULE DE BREVET EUROPEEN

(11) **EP 1 000 692 B1**
(45) Date de publication et mention de la délivrance du brevet: **18.02.2004**
(21) Numéro de dépôt: 99402785.2
(22) Date de dépôt: 09.11.1999
(51) Int. Cl.: B23C 5/10

(54) **Plaquette de fraise**
Fräseinsatz
Milling insert

(30) Priorité: 13.11.1998 FR 9814256
(43) Date de publication de la demande: 17.05.2000
(73) Titulaire: Safety- Fabrique de Carbure de Tungstène et d'Outillages, 92100 Boulogne Billancourt (FR)
(72) Inventeur: Fouquer, Richard, 37540 Saint Cyr sur Loire (FR)
(74) Mandataire: Lhuillier, René

(56) Documents cités:
- EP-A- 0 239 045
- EP-A- 0 585 800
- EP-A- 0 956 921
- DE-U- 9 200 612

## Description

La présente invention concerne les plaquettes fixées de façon amovible ou permanente sur une fraise, et concerne plus particulièrement le profil à donner aux arêtes coupantes de ces plaquettes, comme décrit dans la préambule de la revendication 1.

Dans la présente description, on désigne par Z l'axe de rotation propre de la fraise et par X et Y deux axes tangents à une surface à usiner, les axes X, Y et Z étant indépendants mais pas nécessairement orthogonaux.

Une première gamme d'applications des fraises concerne le surfaçage, c'est-à-dire l'usinage d'une face de pièce pour y créer, par exemple, des rainures ou des épaulements. En particulier, le "dressage" consiste à réaliser un épaulement sur une face de pièce, c'est-à-dire à obtenir, en contrebas de ladite face, un "coin" possédant un angle au sommet de l'ordre de 90°.

Les arêtes de coupe des plaquettes connues présentent généralement un profil tel que le bout actif de la fraise en contact avec la surface à usiner est pratiquement plat. Il en résulte qu'on ne peut pas effectuer de plongée dans la matière, c'est-à-dire une pénétration qui soit dirigée selon Z ou selon une combinaison de l'axe Z avec X ou Y ; en effet, la puissance requise pour actionner une telle fraise serait trop importante ; d'ailleurs, même si l'on y parvenait, la qualité de la surface usinée serait trop mauvaise, et l'évacuation des copeaux serait très inefficace.

On est donc contraint de se placer initialement hors pièce pour attaquer une surface à usiner, ou de forer un trou préparatoire dans ladite surface, toutes ces "solutions" étant bien peu pratiques.

Une seconde gamme d'applications des fraises concerne le perçage, dans une face de pièce à usiner, de trous de large diamètre, c'est-à-dire d'un diamètre supérieur à la plage de valeurs disponibles pour les diamètres de forets. Pour ce faire, on utilise habituellement des fraises à bout hémisphérique grâce auxquelles on peut, de manière efficace, réaliser des trous ayant la forme, par exemple, d'un cylindre droit ; mais le cylindre ainsi obtenu n'est pas parfait, en ce sens que les génératrices de ce cylindre ne se raccordent pas à sa base à angle droit, mais selon un arrondi dont le rayon de courbure est au moins égal au rayon dudit bout hémisphérique (rarement inférieur à 6 mm).

Afin de remédier à ces inconvénients des plaquettes classiques, la demande de brevet européen EP-0 585 800 propose des plaquettes amovibles dont les pointes font saillie vers l'avant, dans la direction de l'axe de fraise, par rapport à la face frontale du corps de fraise sur lequel on les fixe, chacune de ces pointes étant formée par une arête de coupe principale orientée axialement, et par une arête de coupe secondaire "interne", c'est-à-dire faisant face à l'axe de la fraise et formant un certain angle aigu avec celui-ci. On connaissait d'ailleurs déjà un profil de plaquette analogue d'après la demande de brevet européen EP-0 239 045.

Mais on s'est rendu compte que les fraises divulguées dans ces deux documents souffraient de problèmes d'instabilité des plaquettes dans leur logement. En effet, les forces de coupe agissant, en cours d'utilisation, au niveau des pointes avancées de ces plaquettes, exercent un couple qui tend à faire pivoter les plaquettes autour de leur vis de fixation, et à arracher les plaquettes de leur logement. Cet effet nuisible est d'autant plus marqué que la portion de l'arête principale située en avant de la face frontale du corps est longue par rapport à la portion située en arrière de ladite face frontale.

La EP 0 956 927 montre art antérieur selon l'Article 54(3) CBE.

Afin de remédier à ces divers inconvénients des fraises selon l'art antérieur, la présente invention propose une plaquette destinée à équiper des fraises permettant de pénétrer dans la matière à usiner selon une direction perpendiculaire à la surface de ladite matière à usiner, caractérisée en ce que l'un au moins des bords de coupe de ladite plaquette comprend :
une arête principale (A), orientée longitudinalement par rapport à l'axe Z de la fraise,
une arête de raccordement (B), qui peut avoir la forme d'un angle vif, ou d'une courbe, ou encore d'un chanfrein,
une arête optionnelle (C), communément appelée "plat de planage", orientée transversalement par rapport audit axe Z de la fraise,
une arête proximale (D) sensiblement transversale, ladite arête de raccordement (B) faisant saillie vers l'avant de la fraise par rapport à ladite arête proximale (D), et
une arête secondaire (E), qui fait face à l'axe Z de la fraise et fonctionne comme arête de coupe interne, située entre lesdites arêtes (D) et (C), ou (D) et (B) à défaut.

Un avantage principal des plaquettes selon l'invention par rapport aux plaquettes selon l'art antérieur est que, grâce à cette nouvelle arête (D), on peut rapprocher leur pointe avancée de la face frontale du corps de fraise tout en maintenant la direction souhaitable pour ladite arête secondaire (E) par rapport à l'axe Z de la fraise.

Selon un mode de réalisation particulier, ladite plaquette est une plaquette amovible comprenant deux bords de coupe identiques selon l'invention, et pour chacun de ces bords de coupe, la dépouille associée à l'arête proximale (D) sert également de face d'appui postérieur quand on fixe ladite plaquette sur le corps de fraise.

D'autres avantages, buts et caractéristiques de la présente invention ressortiront de la description ci-dessous de modes de réalisation présentés uniquement à titre d'exemples, ladite description s'appuyant sur les figures annexées parmi lesquelles
la figure 1 est une vue en perspective d'une opération de surfaçage-dressage,
la figure 2 représente le bout actif d'une fraise équipée de deux plaquettes selon l'art antérieur dont une est de face et l'autre, visible seulement en partie, est de dos,
la figure 3 représente le bout actif d'une fraise équipée de deux plaquettes selon l'invention dont une est de face et l'autre, visible seulement en partie, est de dos,
les figures 4(a) et 4(b) sont des vues de face schématiques de plaquettes selon deux autres modes de réalisation de l'invention,
la figure 5 est une vue en perspective d'un usinage réalisé à l'aide de plaquettes selon l'invention et au cours duquel le déplacement de la fraise (indiqué par la flèche) a lieu selon son propre axe,
la figure 6 est une vue en élévation du bout actif de la fraise et une vue en coupe de la pièce à usiner au cours de l'opération illustrée sur la figure 5,
la figure 7 est une vue en perspective d'un usinage réalisé à l'aide de plaquettes selon l'invention et au cours duquel l'outil attaque la surface à usiner dans une direction oblique (indiquée par la flèche),
la figure 8 est une vue en élévation du bout actif de la fraise et une vue en coupe de la pièce à usiner au cours de l'opération illustrée sur la figure 7, et
la figure 9 est une vue en perspective d'un usinage en interpolation hélicoïdale réalisé à l'aide de plaquettes selon l'invention.

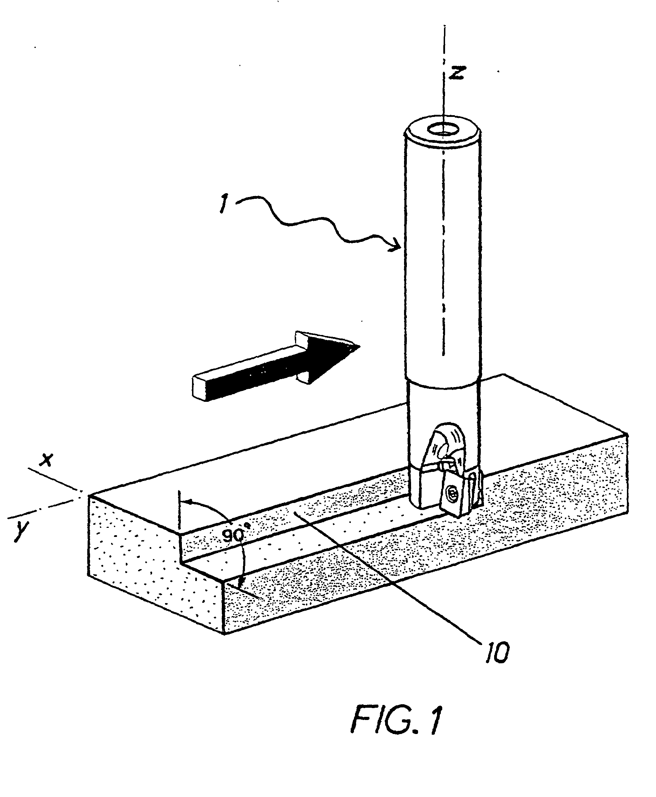

On peut voir sur la figure 1 une fraise 1, d'axe Z, en train de créer un épaulement 10 sur une face d'une pièce à usiner. Le déplacement de la fraise (indiqué par la flèche) a lieu dans une direction parallèle à la surface de ladite face, direction contenue par définition dans le plan X-Y.

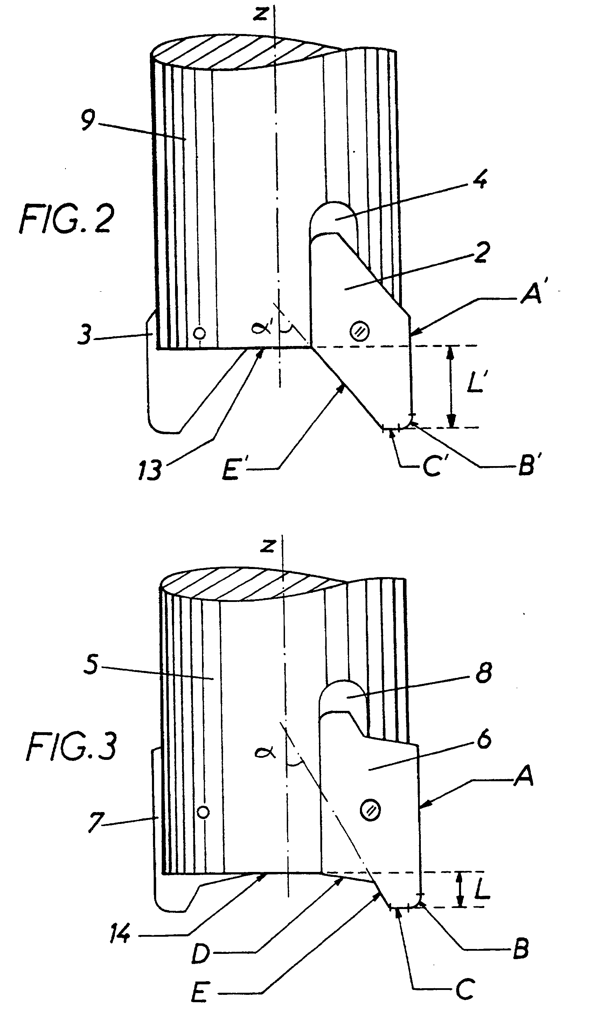

La figure 2 montre un corps de fraise 9 au bout duquel sont vissées deux plaquettes identiques 2 et 3 selon l'art antérieur. On a prévu des poches, telles que la poche 4, pour l'évacuation des copeaux, juste derrière lesdites plaquettes 2 et 3. Le symbole (A') désigne une arête principale de la plaquette 2 qui est orientée longitudinalement par rapport à l'axe de la fraise et peut être rectiligne, hélicoïdale ou autre. Le symbole (B') désigne une zone de raccordement qui peut avoir la forme d'un angle vif, ou d'une courbe, ou encore d'un chanfrein. Le symbole (C') désigne une arête de coupe optionnelle, communément appelée "plat de planage", orientée transversalement par rapport à l'axe Z de la fraise. Le symbole (E') désigne une arête de coupe secondaire interne, c'est-à-dire faisant face à l'axe Z de la fraise, et qui forme un certain angle aigu α' avec ledit axe.

La zone de raccordement (B') fait saillie vers l'avant par rapport à la face frontale 13 du corps de fraise 9. Il en résulte un décalage *L'* entre cette face frontale 13 et le plat de planage (C') (ou, en son absence, l'extrémité correspondante de la zone de raccordement (B')). Cette distance *L'* constitue, en cours d'utilisation, un bras de levier pour les forces de coupe, ce qui cause un couple déstabilisant fâcheusement les plaquettes vis-à-vis de leur logement respectif.

La figure 3 représente un corps de fraise 5 au bout duquel sont vissées deux plaquettes identiques 6 et 7 selon l'invention. On a prévu des poches, telles que la poche 8, pour l'évacuation des copeaux juste derrière lesdites plaquettes 6 et 7. Les parties (A), (B), (C) et (E) de la plaquette 6 sont respectivement analogues aux parties (A'), (B'), (C') et (E') de la plaquette 2, mais la plaquette 6 selon l'invention en diffère en ce que le bord de coupe se termine dans sa portion proximale, c'est-à-dire au plus près de l'axe de fraise Z, par une arête (D) sensiblement transversale. La comparaison entre les figures 2 et 3 fait tout de suite apparaître que, grâce à cet agencement, la distance *L* entre la pointe avancée de la plaquette 6 et la face frontale 14 de la fraise selon l'invention, est inférieure à *L'* à longueur axiale égale de la plaquette. Ainsi, le bras de levier associé aux forces de coupe est moindre, et les plaquettes selon l'invention sont de ce fait nettement plus stables dans leur logement que les plaquettes selon l'art antérieur. On notera qu'il n'a pas été nécessaire, pour obtenir ce résultat, de prendre entre l'arête de coupe secondaire (E) et l'axe Z de la fraise un angle α supérieur à α'.

La distance *L* sera de préférence comprise entre 10% et 40% de la longueur de l'arête (A). Quand à l'angle α, il peut, selon les besoins, varier de façon très large ; il sera préférablement compris entre 10° et 70°.

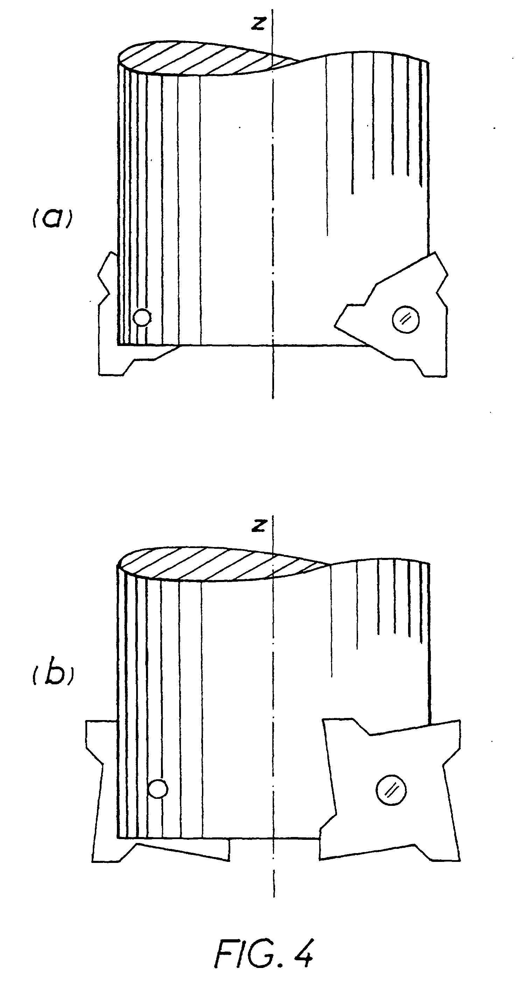

Dans le cas où, comme illustré sur les figures 3 et 4 (a), la plaquette considérée est une plaquette amovible munie de deux bords de coupe identiques selon l'invention, on peut tirer profit de l'indexation de la plaquette pour faire jouer à la dépouille de l'arête (D) le rôle de face de localisation. Autrement dit, on peut utiliser cette face en dépouille pour positionner la plaquette 6 longitudinalement, par appui contre une face postérieure du logement de plaquette, quand on fixe la plaquette 6 sur le corps de fraise 5.

On peut également souhaiter disposer de plus de deux bords de coupe selon l'invention sur une même plaquette amovible. Le profil résultant, dans le cas où l'on a trois, ou quatre tels bords de coupe, est illustré respectivement sur les figures 4(a) et 4(b).

Une fraise équipée de plaquettes selon l'invention peut être utilisée de diverses manières.

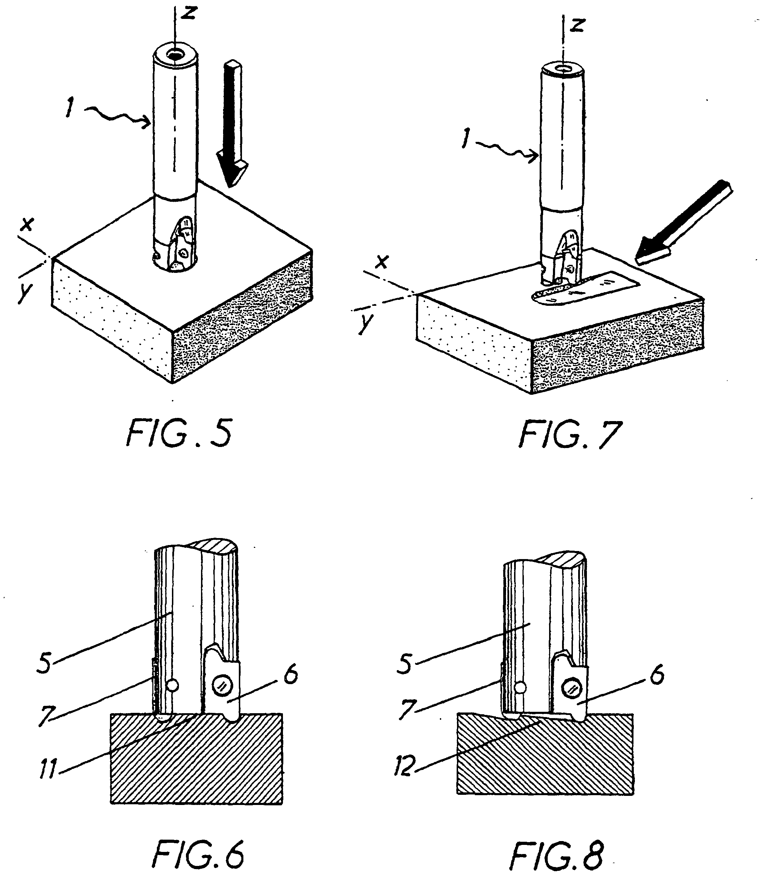

On peut par exemple, comme le montre la figure 5, plonger directement dans la matière à usiner en déplaçant la fraise selon son axe Z. Comme on peut le voir sur la figure 6, un monticule 11 se forme à la surface de la pièce à usiner sous la face frontale 14 de la fraise, par suite de sa translation et de sa rotation propre ; ledit monticule 11 est cerné par le sillon circulaire résultant de l'enlèvement de matière combiné des arêtes de type (A) sur le bord externe de ce sillon et des arêtes de type (E) sur ses bords internes, ces derniers constituant ainsi les flancs du monticule 11.

La translation de la fraise selon Z la conduit assez rapidement à buter sur ce monticule 11, mais il est alors facile de poursuivre l'usinage en déplacement selon X-Y, afin de réaliser un type quelconque de surfaçage.

On peut tout aussi bien attaquer la surface à usiner dans une direction oblique, comme le montre la figure 7. Il se forme alors sous le bout actif de la fraise un monticule 12 de matière à usiner, lequel, en l'occurrence, présente l'aspect illustré sur la figure 8. Ce deuxième mode d'emploi de l'invention permet de pénétrer dans la pièce sans limitation dans la profondeur atteinte.

On voit donc que, quelle que soit la façon dont on utilise une fraise selon l'invention, il se reforme continuellement, à la surface de la pièce à usiner, un monticule de matière qui est arasé au fur et à mesure de la progression de ladite fraise selon X-Y (éventuellement en combinaison avec Z). Ce processus permet donc de finir une surface de la pièce de manière à. lui conférer tout aspect voulu.

On atteint ainsi l'objectif visé dans l'introduction du présent mémoire puisque, grâce aux plaquettes selon l'invention, on est en mesure d'attaquer une pièce à usiner en n'importe quel endroit sur une de ses faces (au lieu d'avoir à forer un trou en cet endroit au préalable, ou d'avoir à commencer l'usinage hors pièce), sans pour autant déstabiliser la fixation de ces plaquettes dans leur logement.

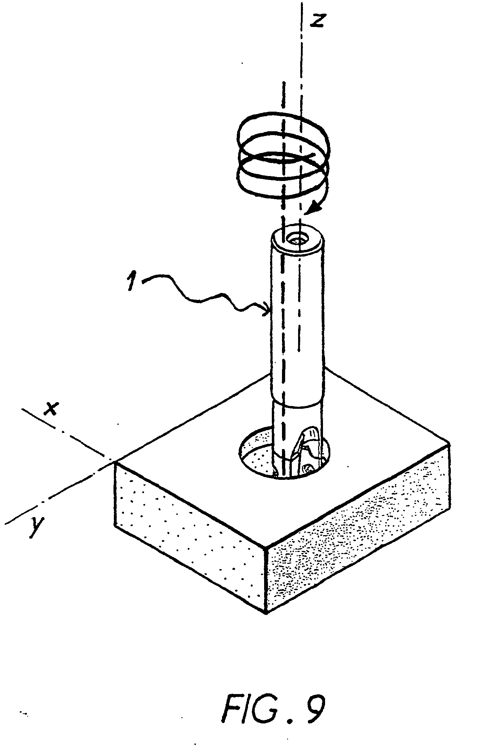

Un autre mode d'utilisation encore pour une fraise selon l'invention, important lui aussi dans la pratique, consiste à faire décrire à la fraise une translation le long d'une trajectoire hélicoïdale dont l'axe est parallèle à l'axe Z de la fraise, ainsi que le montre la figure 9. On peut ainsi percer dans une pièce à usiner un trou de diamètre quelconque, dont le fond pourra, au choix, présenter des bords tranchés ou arrondis, selon le profil donné à la zone de raccordement (B) sur les plaquettes.

Avantageusement, on exploitera de façon judicieuse les possibilités offertes par les machines à commande numérique (CNC). On rappelle que celles-ci permettent un asservissement programmable du déplacement d'un outil selon les trois axes, de manière indépendante ou interpolée. Ces machines sont par exemple d'usage courant pour piloter les fraises hémisphériques, mais on n'en tire pas pleinement parti dans le cas des fraises à surfacer-dresser classiques puisque le déplacement selon l'axe Z, seul ou en combinaison, y est impraticable.

On notera pour terminer un avantage supplémentaire des fraises selon l'invention, qui consiste en ce qu'il n'est pas nécessaire de suspendre les opérations d'usinage pour évacuer les copeaux : en effet, ces derniers sont éliminés automatiquement par les poches d'évacuation.

Les modes de réalisation de l'invention décrits ci-dessus ont été présentés en tant qu'exemples illustrant les principes de la présente invention, mais il est bien clair que l'homme de l'art pourra s'en inspirer pour réaliser d'autres variantes sans pour autant sortir de l'invention. Par exemple, l'arête (E) n'est pas nécessairement parfaitement rectiligne ; elle pourra être avantageusement constituée d'une succession de petites portions tantôt droites et tantôt courbes.

## Revendications

1. Plaquette amovible pour fraise d'attaque en bout d'une pièce à usiner, plaquette comportant les arêtes de coupe suivantes :
- une arête principale latérale externe (A), prévue pour être disposée de façon radialement externe par rapport à un axe longitudinal de la fraise,
- une arête avant d'attaque en bout (B, C), constituant une saillie axiale de l'arête principale (A), et
- une arête interne (E), constituant une suite, en retrait axial, de l'arête d'attaque en bout (B, C), l'arête interne (E) étant, partiellement, tournée vers l'avant et vers une direction opposée à celle de l'arête principale (A), en formant un angle (α) déterminé avec l'arête principale (A),
plaquette **caractérisée par le fait que** l'arête interne (E) se poursuit, jusqu'à un côté latéral opposé à l'arête principale (A), par une arête transversale (D) à orientation sensiblement perpendiculaire à l'arête principale (A), en formant avec l'arête principale (A) un angle supérieur à l'angle (α) de l'arête interne (E) et inférieur à 90 degrés.

2. Plaquette selon la revendication 1, comportant deux ensembles d'arêtes selon la revendication 1, le dit côté latéral comportant l'autre arête principale, et les arêtes transversales (D) présentant une dépouille prévue comme face d'appui postérieur destinée à coopérer avec une face correspondante de la fraise.

## Patentansprüche

1. Lösbaren Fräseinsatz, um mit dem Fräser-Ende in ein zu bearbeitendes Werkstück hineinzuschneiden, wobei dieser Fräseinsatz die folgenden Schneidkanten aufweist:
- eine äußere seitliche Hauptschneide (A), die sich in radialer Richtung außen befindet, bezogen auf eine Längsachse der Fräse,
- eine vordere Endschneide (B, C), axial aus der Hauptschneide (A) vorstehend, und
- eine Innenschneide (E), die eine axial zurückversetzte Fortsetzung der Endschneide (B, C) bildet, wobei die Innenschneide (E) partiell nach vom gerichtet ist, in einer zu der der Hauptschneide (A) entgegengesetzten Richtung, und dabei mit der Hauptschneide (A) einen bestimmten Winkel (α) bildet,
**dadurch gekennzeichnet,**
**dass** die Innenschneide (E) sich bis zu einer der Hauptschneide (A) entgegengesetzten seitlichen Fläche durch eine transversale Schneide (D) fortsetzt, die zu der Hauptschneide (A) im Wesentlichen senkrecht ausgerichtet ist und dabei mit der Hauptschneide (A) einen Winkel bildet, der größer ist als der Winkel (α) der Innenschneide (E) und kleiner als 90 Grad.

2. Fräseinsatz nach Anspruch 1 mit zwei Sätzen von Schneidkanten nach Anspruch 1, wobei die genannte Seitenfläche die andere Hauptschneide umfasst und die transversalen Schneiden (D) eine Freiflächenfase aufweisen, vorgesehen als hintere Stützfläche, um mit einer entsprechenden Fläche des Fräsers zu kooperieren.

## Claims

1. A removable insert for a milling cutter acting end-on on a workpiece, the insert comprising the following cutting edges:
- an external lateral main edge (A) designed to be arranged radially externally with respect to a longitudinal axis of the cutter,
- an end-on front edge (B, C), constituting an axial projection of the main edge (A), and
- an internal edge (E) constituting a continuation, set back axially, of the end-on edge (B, C), the internal edge (E) facing partially forwards and in a direction away from that of the main edge (A), forming a particular angle (α) with the main edge (A),
the insert being **characterised in that** the internal edge (E) is continued, as far as a lateral side opposite the main edge (A), by a transverse edge (D) orientated roughly at right angles to the main edge (A) and forming with the main edge (A) an angle greater than the angle (α) of the internal edge (E) and less than 90 degrees.

2. An insert according to claim 1, comprising two sets of edges according to claim 1, the said lateral side comprising the other main edge and the transverse edges (D) having a relief designed as a rear bearing face intended to cooperate with a corresponding face of the cutter.
